# FASCICULE DE BREVET EUROPEEN

(11) **EP 2 342 793 B1**
(45) Date de publication et mention de la délivrance du brevet: **05.05.2021**
(21) Numéro de dépôt: 09748379.6
(22) Date de dépôt: 01.10.2009
(51) Int. Cl.: H02J 4/00

(54) **ARCHITECTURE DE RESEAU ELECTRIQUE POUR MILIEUX CONFINES INCORPORANT DES SOURCES D'ENERGIE ELECTRIQUE**
ELEKTRISCHE NETZWERKARCHITEKTUR FÜR EINGEGRENZTE UMGEBUNGEN MIT ELEKTRISCHEN STROMQUELLEN
ELECTRIC NETWORK ARCHITECTURE FOR CONFINED ENVIRONMENTS INCLUDING ELECTRIC POWER SOURCES

(30) Priorité: 01.10.2008 FR 0805431
(43) Date de publication de la demande: 13.07.2011
(73) Titulaire: Novatec SA, 82000 Montauban (FR); Carrillo, Jean-Jacques, 82000 Montauban (FR); Michel, Stéphane, 31700 Beauzelle (FR)
(72) Inventeur: CARRILLO, Jean-Jacques, F-82000 Montauban (FR)
(74) Mandataire: Ipside
(86) Numéro de dépôt international: PCT/FR2009/001173
(87) Numéro de publication internationale: WO 2010/037935

(56) Documents cités:
- FR-A- 2 911 847
- US-A1- 2003 216 876
- US-A1- 2006 056 124
- "AUTOMATED POWER-DISTRIBUTION SYSTEM" NTIS TECH NOTES, US DEPARTMENT OF COMMERCE. SPRINGFIELD, VA, US, 1 février 1991 (1991-02-01), page 128,1,2, XP000224742 ISSN: 0889-8464
- ANDERSON P M ET AL: "Automated power distribution system hardware" 19890806; 19890806 - 19890811, 6 août 1989 (1989-08-06), pages 579-584, XP010089773

## Description

### Domaine technique

La présente invention est du domaine des équipements électriques pour milieux confinés et a pour objet une nouvelle architecture de réseau électrique incorporant des sources d'énergie électrique pour alimenter une ou plusieurs charges électriques. Plus particulièrement, la présente invention est relative à une architecture de réseau électrique à taux accru d'occupation en courant, pour aéronef ou autres véhicules de transport, ainsi que pour bâtiments à usage particulier tels qu'hôpitaux etc.

### Etat de la technique antérieure.

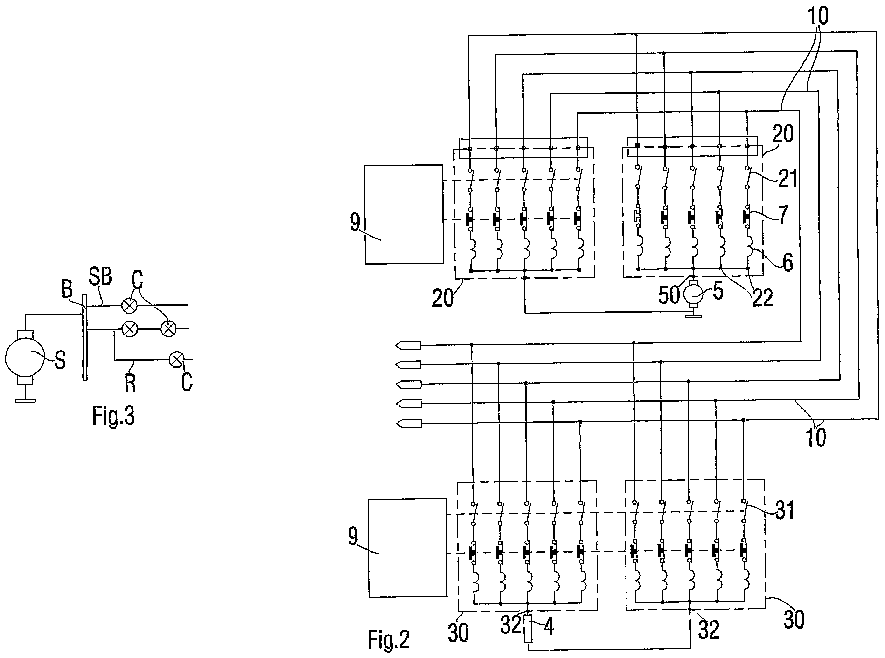

Typiquement, les réseaux électriques connus pour aéronefs et autres, comme représenté schématiquement en figure 3 sont organisés en arborescence de sorte que chaque charge électrique C est connectée à la source d'énergie électrique S par plusieurs conducteurs électriques agencés en série formant par exemple, depuis la source S, une barre B, et une branche ou sous barre SB et une ramification R. Ces conducteurs sont de sections croissantes depuis la charge C vers la source S de courant. Ceci s'explique par le fait que chaque sous barre SB alimente généralement plusieurs ramifications R qui alimentent chacune une charge C et que chaque barre B alimente plusieurs sous barres SB.

À ces voies de transport d'énergie électrique sont associés des moyens de protection contre les surintensités électriques tels que des disjoncteurs certains utilisant des SSPC acronyme de « solid state power controler» (Elément statique de coupure de puissance).

### Exposé de l'invention

### Problème technique

La configuration telle que précédemment décrite présente plusieurs inconvénients majeurs.

Le transport de l'énergie à chaque charge n'emprunte qu'une seule voie avant le disjoncteur de sortie de sorte qu'une rupture de l'un des conducteurs de cette voie empêche le fonctionnement normal de la ou des charges électriques qui lui sont associées. Ce défaut est sans conséquence sur la sécurité si la ou les charges électriques ne sont pas critiques pour le fonctionnement normal de l'aéronef.

Les documents « Automated- power distribution system » NTIS tech notes, US department of commerce. Springfield, VA, US, 1 février 1991 (1991-02-01), page 128,1,2,XP000224742 ; US 2006/056124 A1(Michalko Rodney G [CA]) 16 Mars 2006 (2006-03-16) ; US 2003/216876 A1 (Premerlani William James [US] et AL) 20 Novembre 2003 (2003-11-20) ; FR 2 911 847 A (Hispano Suiza soc [FR]) 1 août 2008 (2008-08-01) et WO 2009/052843 A (Siemens AG [DE] ; Blystad Svein [NO] ; Van Ravens Rune [NO]) 30 Avril 2009 (2009-04-30) font tous référence à des distributions électriques qui n'empruntent qu'une voie à la fois et qui nécessitent une reconfiguration pour réalimenter la charge, ou bien qui sont alimentées par plusieurs générateurs mis en parallèle sur le réseau.

La section de chaque conducteur est déterminée par l'intensité maximale des pics de consommation susceptibles de la traverser, alors que ces événements peuvent n'être que ponctuels et ne se produire qu'un nombre limité de fois durant le vol pour ce qui concerne une utilisation aéronautique. Le reste du temps, la valeur de l'intensité du courant pourrait être largement en deçà de cette consommation de crête. Cette disposition conduit à surdimensionner le câblage pour tenir compte des pics de consommation et par voie de conséquence à augmenter la masse du câblage.

Habituellement la conception d'un réseau de distribution de l'énergie électrique pour avion du type gros porteur, occupe à temps plein plusieurs équipes d'ingénieurs pendant toute la durée du programme, en installation, en développement, en câblage, en certification, en gestion de configuration et en recherche et développement.

En vue de cette étude est pris en compte le positionnement des charges dans l'avion, la consommation branche par branche et source d'énergie électrique par source d'énergie électrique et ce pour chacune des phases du vol. Les courants de crêtes à savoir les pics de consommation sont également pris en compte.

Un cycle d'étude à forte récursivité conduit à réaffecter les charges à des fins d'optimisation. Des fichiers de configuration pour les charges et les SSPC sont ensuite établis.

Les charges électriques de l'aéronef comprennent bien souvent des charges dites commerciales répondant aux souhaits et besoin des compagnies aériennes. Une modification ou un ajout d'une charge, même commerciale entraîne dans la plupart des cas, si cette modification n'a pas été prévue à l'origine l'élaboration d'un nouveau fichier de configuration ce qui peut poser des problèmes de certification.

En outre la gestion de configuration de charges optionnelles multiples pose d'importants problèmes en gestion de configuration.

Un autre inconvénient tient au fait que pour certaines structures notamment en matériau composite, un défaut d'isolation entre un conducteur et ladite structure peut endommager très gravement cette dernière en raison du dégagement de chaleur provoqué par un apport important d'énergie.

Enfin la gestion des réseaux actuels ne permet pas d'équilibrer les sources d'énergie électrique avec les charges d'une façon dynamique.

La seule possibilité offerte par les réseaux connus en cas de surcharge des générateurs est le délestage en cours d'utilisation ce qui s'avère très insuffisant.

### Solution technique

La présente invention a pour objet de résoudre les problèmes sus évoqués en mettant en œuvre une nouvelle architecture de réseau électrique pour milieux confinés tels qu'aéronefs permettant une réduction notable de la masse du câblage.

Un autre but de la présente invention est de faciliter l'intégration de nouvelles charges électriques sans qu'il soit nécessaire d'opérer d'importants calculs d'optimisation de l'équilibrage des charges électriques.

Un autre but de la présente invention est de permettre un équilibrage dynamique des sources d'énergie électrique pendant l'utilisation.

À cet effet la nouvelle architecture de réseau électrique pour milieux confinés tels qu'aéronefs se caractérise en ce qu'elle comporte les caractéristiques techniques de la revendication indépendante 1.

En raison de cette architecture, la réalisation de l'installation se trouve grandement simplifiée et l'addition d'une charge non prévue dès l'origine ne posera pas de problème particulier, cette charge en fonction de la puissance électrique qu'elle absorbe sera connectée à un ou plusieurs conducteurs du réseau principal simultanément.

La configuration telle que précédemment définie permet de limiter l'intensité des courants circulant dans chaque conducteur ce qui est un facteur de sécurité contre les dégâts électriques susceptibles d'être causés à la structure.

En cas de défaillance d'une des sources d'énergie électrique et plus généralement de l'une des voies d'alimentation de la charge, la charge associée pourra être commutée sur une ou plusieurs autres voies et le cas échéant sur une ou plusieurs autres sources d'énergie dans la mesure où ces dernières sont compatibles entre-elles.

Selon un exemple de réalisation de l'invention, le moyen sélecteur de chaque sous ensemble de distribution primaire est constitué par plusieurs relais comportant une borne commune par laquelle ils sont connectés à la borne correspondante de la source d'énergie électrique choisie, chaque relais étant connecté par ailleurs à l'un au moins des conducteurs du réseau principal, ces conducteurs étant eux-mêmes associés à une même source d'énergie ou bien à plusieurs sources compatibles entre-elles, c'est-à-dire à des sources qui peuvent être mises en parallèle pour alimenter une charge sans risque de détérioration d'une partie du réseau et/ou des sources et sans risque de mauvais fonctionnement.

Selon un exemple de réalisation de l'invention, le moyen sélecteur de chaque ensemble de distribution secondaire est constitué par plusieurs relais connectés à la borne de connexion de la charge, chaque relais étant connecté par ailleurs à l'un des conducteurs du réseau principal.

Avantageusement, selon un exemple de réalisation de l'invention, les relais de chaque sous ensemble de distribution primaire et de chaque ensemble de distribution secondaire sont actionnés dans le sens de l'ouverture ou de la fermeture à partir par un contrôleur piloté par un logiciel approprié ou par une électronique appropriée prenant en compte la configuration des charges.

Selon un exemple de réalisation de l'invention, le logiciel ou l'électronique assure l'équilibrage dynamique des courants dans le réseau et l'équilibrage dynamique des sources d'énergie électrique par commutation des charges et/ou des sources d'énergie électriques.

Une telle disposition permet la gestion dynamique des sources d'énergie électrique ainsi que des courants et des charges.

Selon un exemple de réalisation de l'invention à chaque relais est connecté en série avec un moyen de protection contre les surintensités électriques.

Selon un exemple de réalisation, l'invention concerne une architecture caractérisée en ce que le moyen sélecteur de chaque sous ensemble de distribution primaire est constitué par plusieurs relais comportant une borne commune par laquelle ils sont connectés à la borne correspondante de la source d'énergie électrique choisie chaque relais étant connecté par ailleurs à l'un des conducteurs du réseau électrique principal, ce conducteur étant propre au dit sélecteur.

Selon un exemple de réalisation, l'invention concerne une architecture caractérisée en ce que le moyen sélecteur de chaque ensemble de distribution secondaire est constitué par plusieurs relais connectés à la borne de connexion de la charge, chaque relais étant connecté par ailleurs à l'un des conducteurs du réseau électrique principal, ce conducteur étant propre au dit sélecteur.

### Description sommaire des figures et des dessins.

D'autres avantages et caractéristiques de l'invention apparaîtront à la lecture de la description d'une forme préférée de réalisation donnée à titre d'exemple non limitatif en se référant aux dessins annexés dans lesquels :
- la figure 1 montre une vue schématique de l'architecture conforme à l'invention,
- la figure 2 montre un mode de connexion d'une charge, permettant des mesures différentielles de courant.

### Exemple de réalisation de l'invention

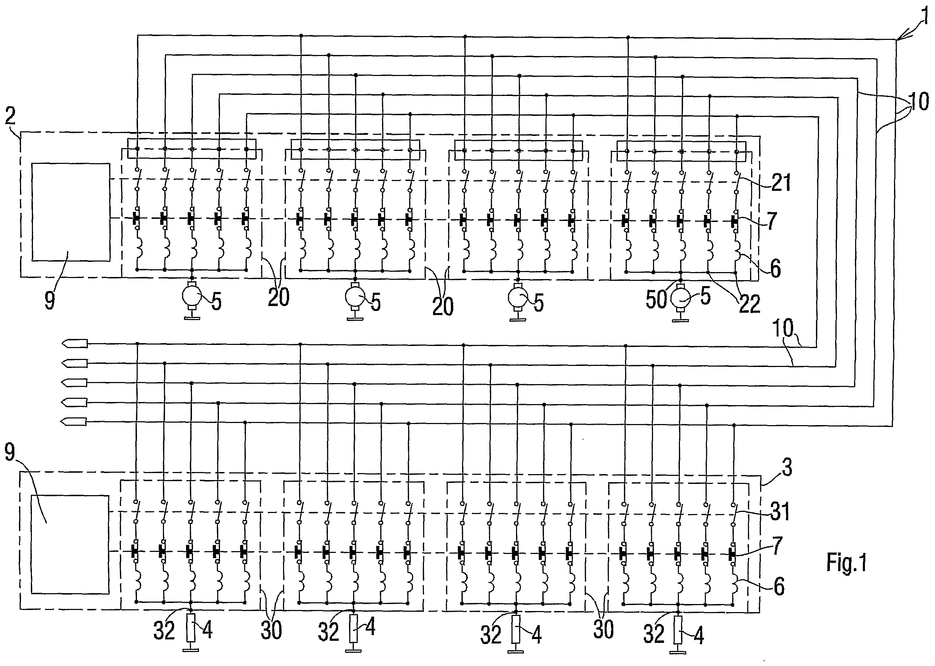

En figure 1 est représentée une architecture selon l'invention.

Cette architecture comprend un réseau électrique principal 1, un ensemble 2 de distribution primaire connecté électriquement au réseau principal 1 et au moins un ensemble de distribution secondaire 3 connecté électriquement à une partie au moins du réseau électrique principal, cet ensemble de distribution secondaire 3 étant destiné à alimenter en énergie électrique plusieurs charges électriques 4.

Le réseau électrique principal 1 peut se présenter physiquement sous la forme de conducteurs électriques 10 se présentant par exemple sous la forme de câbles électriques avec isolations appropriées ou bien sous la forme de pistes électriquement conductrices écartées les unes des autres, formées sur un support souple ou rigide électriquement isolé.

Des équipements de connexion pourront être associés à ce circuit électrique principal 1 pour par exemple permettre la connexion future d'ensemble de distributions secondaires 3.

L'ensemble de distribution primaire 1 peut comporter plusieurs sources distinctes d'énergie électrique 5 du type à courant continu ou alternatif monophasé ou polyphasé. Pour ce qui concerne un aéronef, ces sources d'énergie 5 peuvent être constituées, de manière non limitative, par les génératrices actionnées par le ou les moteurs de ce dernier.

Dans le cas d'un générateur polyphasé chaque phase est reliée à un reseau électriquement distinct de celui ou de ceux associés aux autres phases.

Chaque source d'énergie électrique 5 présente au moins une borne de sortie 50 sur laquelle une puissance électrique est disponible.

L'ensemble de distribution primaire est constitué d'un ou plusieurs sous-ensembles de distribution primaire 20 connecté à une source d'énergie électrique dédiée 5.

L'un au moins des conducteurs 10 du réseau électrique principal 1 peut être connecté à la masse ou un neutre d'une source d'énergie électrique 5.

Chaque sous-ensemble de distribution primaire 20 est constitué d'un moyen sélecteur lequel est connecté électriquement à plusieurs conducteurs électriques 10 du réseau électrique 1 d'une part et d'autre part à la source d'énergie électrique 5 dédiée, ou à plusieurs sources compatibles entre elles ou bien à la masse ou au neutre. Par ce moyen sélecteur 20 plusieurs liaisons électriques indépendantes sont formées entre la source d'énergie électrique 5 et les conducteurs électriques 10 associés, ces liaisons électriques pouvant individuellement être fermées ou ouvertes par le moyen sélecteur 20 de façon que le conducteur 10 associé à chaque liaison puisse être alimenté ou non en énergie électrique.

Le moyen sélecteur 20, constitutif de chaque sous ensemble de distribution électrique est constitué par plusieurs relais 21, formant chacun interrupteur, comportant une borne commune 22 par laquelle ils sont connectés à la source d'énergie électrique 5 correspondante. En outre chaque relais 21 par une seconde borne 23 est connecté à l'un des conducteurs 10 du réseau électrique principal 1.

Chaque ensemble de distribution secondaire 3 comprend au moins un moyen sélecteur 30 connecté à une borne de sortie unique 32 à laquelle une charge électrique dédiée 4 est destinée à être connectée. Ce moyen sélecteur est par ailleurs connecté à plusieurs conducteurs 10 du réseau électrique principal, ces conducteurs étant alimentés par une même source d'énergie électrique 5 ou par des sources d'énergie électriques compatibles entre-elles. Ces conducteurs, comme dit précédemment, peuvent être connectés soit au neutre de l'une des sources soit à la masse.

Ce moyen sélecteur 30 a pour but d'assurer la fermeture ou l'ouverture des liaisons électriques établies entre la borne électrique de sortie 32 et les conducteurs concernés 10 du réseau électrique principal 1, et ce de manière dynamique.

Il pourra assurer par exemple, par la fermeture d'une liaison électrique ou plus, l'alimentation de la charge 4 en énergie électrique.

Ce moyen sélecteur pourra également établir, en cas de défaillance par exemple d'un des conducteurs 10 associés, l'alimentation de cette charge 4 à partir d'un autre conducteur 10 du réseau 1. Cette commutation peut aussi être effectuée non pas dans un but de contourner un défaut électrique mais dans un but d'équilibrage des courants, cet équilibrage s'effectuant de manière dynamique.

Chaque moyen sélecteur 30 de chaque ensemble de distribution secondaire 3 comprend plusieurs relais 31 reliés à la borne 32 de connexion de la charge 4. Chaque relais 31 est connecté par ailleurs à l'un des conducteurs 10 du réseau électrique principal 1, les relais 31 d'un même moyen sélecteur 30 étant connectés à des conducteurs électriques 10 différents.

Chaque conducteur 10 du réseau principal est connecté à l'une au moins des sources d'énergie électrique 5 ou bien à la masse ou bien au neutre, par l'intermédiaire d'un des relais 21 connecté à cette source, masse ou neutre.

Dans la forme de réalisation objet de la figure 1, chaque conducteur 10 est connecté à plusieurs sources d'énergie électrique 5.

De même, chaque conducteur 10 du réseau électrique principal est connecté à l'un des relais 31 de l'un au moins moyen sélecteur 30 de l'ensemble de distribution secondaire 3. Selon la forme préférée de réalisation, chaque conducteur 10 est connecté à l'un des relais 31 de plusieurs moyen sélecteur 30.

Les différents relais 21, 31, qu'ils fassent partie du moyen sélecteur 20 ou des moyens sélecteurs 30 seront manœuvrables à distance indépendamment les uns des autres par un circuit de commande et de contrôle 9 approprié mettant en œuvre essentiellement des moyens informatiques ou électroniques adaptés de gestion du réseau.

Cette disposition permet une gestion dynamique des sources 5, par exemple, elle permet d'isoler une des sources 5 en cas de défaillance de cette dernière et de commuter sur une autre source 5 au moins, les conducteurs 10 précédemment alimentés par la source défaillante 5.

Elle permet aussi une gestion dynamique des courants et des charges, de leur affectation, le courant d'alimentation d'une charge 4 pouvant être réparti sur plusieurs conducteurs 10 via plusieurs relais.

Les relais seront par exemple du type de ceux pouvant être piloté par un signal électrique ou par un signal optique.

À chaque relais sera associé en série au moins un moyen de protection 6 constitué par un élément fusible et un moyen de protection 7 constitué par un disjoncteur. Avantageusement le composant de coupure que possède le disjoncteur formera le relais 31. Cet ensemble disjoncteur relais sera avantageusement constitué par un SSPC.

On observe en figure 2 un sous ensemble de distribution primaire 20 relié à la masse électrique de l'installation ou bien au neutre d'une source d'énergie électrique (cas d'un neutre isolé de la masse) et un ensemble de distribution secondaire 30 connecté à ce sous ensemble de distribution primaire par l'intermédiaire de plusieurs conducteurs du réseau électrique principal. On observe également qu'une charge 4 est connectée à cet ensemble de distribution secondaire 30 et que cette charge 4 est connectée également à un autre ensemble de distribution secondaire lequel, dans ce cas de figure est connecté à une source d'énergie par l'intermédiaire d'un autre sous ensemble de distribution primaire.

Une telle disposition permet des mesures différentielles de courant pour détecter toutes fuites de courant vers la masse (protection différentielle) ou bien atténuer les effets négatifs électromagnétiques.

Le réseau électrique principal sera surveillé à la fois au niveau des surintensités et par des mesures différentielles entre la somme des courants primaires et la somme des courants secondaires et ce pour chacun des conducteurs. Des méthodes de corrélations temporelles sur les variations de courants et de tensions permettront de s'affranchir d'erreurs de mesures et l'ensemble de ces dispositions telles que décrites permettront de détecter les arcs électriques séries et parallèles. D'autres dispositifs basés sur des mesures de tensions et courants et leurs variations au niveau des sous ensemble primaires et des ensembles secondaires permettront de localiser précisément un défaut dans le réseau.

Avantageusement, seront prévus des moyens de test de la continuité électrique et des courts circuits des liaisons électriques depuis les sources 5 jusqu'aux charges 4. Ces liaisons seront testées à intervalles réguliers et en cas de défaut seront isolées.

Seront également prévus des moyens de test de la capacité d'ouverture des disjoncteurs associés à une même charge, par ouverture régulière et séquencée de ces derniers.

Ces différentes fonctions de test seront prises en charge par le logiciel de gestion du réseau.

Avantageusement la gestion des disjoncteurs sera réalisée par le logiciel et l'électronique qui réalise les autres fonctions de contrôle et de gestion du réseau.

Avantageusement les moyens sélecteurs et disjoncteurs des sous ensemble primaire et des ensembles de distribution secondaires seront constitués par des disjoncteurs en tranches tels que ceux décrits dans la demande de brevet pour « Disjoncteur en tranches » déposée ce même jour par le demandeur.

L'architecture telle que décrite, conjointement au transport de l'énergie électrique d'alimentation des charges, peut être utilisée aussi pour le transport d'informations numériques, ce qui est propre à réduire l'importance des réseaux affectés à cette tâche.

## Revendications

1. Réseau électrique pour milieu confiné destiné à transporter une énergie électrique depuis au moins une source d'énergie électrique (5) vers plusieurs charges électriques (4):
a) le réseau électrique comportant un réseau électrique principal (1) comportant plusieurs conducteurs électriques (10), isolés électriquement les uns des autres, aptes à distribuer une énergie électrique entre un ensemble de distribution primaire (2) de l'au moins une source d'énergie électrique (5) et un ensemble de distribution secondaire (3) vers la pluralité de charges (4) ;
b) dans lequel l'ensemble de distribution primaire (2) comporte pour chaque source d'énergie électrique (5) au moins un moyen sélecteur (20) sous-ensemble de distribution primaire, lequel moyen sélecteur (20) comporte une pluralité d'interrupteurs (21), lesquels interrupteurs comportent :
- une borne commune (22), commune à tous les interrupteurs du moyen sélecteur considéré, destinée à être raccordée à une borne de la source d'énergie électrique (5) correspondante ;
- chacun une seconde borne (23) connectée à l'un des conducteurs électrique (10) du réseau électrique principal ;
c) dans lequel l'ensemble de distribution secondaire (3) comporte pour chaque charge électrique (4) un moyen sélecteur (30) sous-ensemble de distribution secondaire lequel moyen sélecteur (30) comporte une pluralité d'interrupteurs (31), lesquels interrupteurs comportent :
- une borne électrique de sortie (32), commune à tous les interrupteurs du moyen sélecteur considéré, destinée à être raccordée à la charge électrique (4) correspondante ;
- chacun une seconde borne connectée à l'un des conducteurs électriques (10) du réseau électrique principal ; et
d) le réseau électrique comportant un circuit de commande et de contrôle (9) adapté à la gestion du réseau électrique, et d'autres dispositifs de mesure de tensions et courants au niveau des sous-ensembles primaires (2) et des ensembles secondaires (3), **de sorte,** pour chaque charge électrique (4) , d'assurer, par des actions effectuées par le circuit de commande et de contrôle sur les interrupteurs (31) des moyens sélecteurs (30) sous-ensemble de distribution secondaire (3) associés à chaque charge électrique (4), la fermeture ou l'ouverture d'une liaison électrique ou plus parmi les liaisons électriques établies entre la borne électrique de sortie (32) et les conducteurs électriques concernés (10) du réseau électrique principal (1) et l'alimentation de la charge électrique correspondante (4) en énergie électrique, et ce de manière dynamique, **et de sorte** à localiser et isoler un défaut dans le réseau électrique (1), basés sur les mesures de tensions et courants et leurs variations au niveau des sous ensemble primaires (2) et des ensembles secondaires (3).

2. Réseau électrique selon la revendication 1, dans lequel chaque interrupteur (21, 31) de chaque moyen sélecteur (20, 30) est connecté en série au moins un moyen de protection (6, 7) contre les défauts électriques tels que surintensités électriques, surtensions électriques, sous-tensions électriques, défauts différentiels et arcs électriques séries ou parallèles.

3. Réseau électrique selon la revendication 1 ou la revendication 2, destiné à transporter l'énergie électrique depuis plusieurs sources d'énergie électriques (5) vers plusieurs charges (4) dans lequel les interrupteurs (21) de chaque sous-ensemble (20) de distribution primaire et de chaque sous-ensemble (30) de distribution secondaire sont actionnés dans le sens de l'ouverture ou de la fermeture par commande à distance par un contrôleur, prenant en compte la configuration des charges, ledit contrôleur assurant l'équilibrage dynamique des courants dans le réseau entre les sources d'énergie électrique (5) et/ou entre les conducteurs par des commutations de charges et/ou de sources d'énergie électriques sur les conducteurs électriques (10) du réseau.

4. Réseau électrique selon la revendication 2, dans lequel le moyen de protection comprend un élément fusible (6).

5. Réseau électrique selon la revendication 2, dans lequel le moyen de protection comprend un disjoncteur (7).

6. Réseau électrique selon l'une quelconque des revendications précédentes, dans lequel la borne de la source d'énergie électrique (5) à laquelle un conducteur (10) du réseau électrique principal (1) sera connecté par l'intermédiaire d'un des interrupteurs (21) d'un moyen sélecteur (20) sous-ensemble de distribution primaire est une borne de sortie (50) de ladite source d'énergie électrique (5) ou un neutre de ladite source d'énergie ou une masse de l'installation électrique.

7. Réseau électrique selon l'une quelconque des revendications précédentes, dans lequel chaque conducteur (10) du réseau électrique principal (1) est connecté à l'un des interrupteur (31) d'au moins un des moyens sélecteur (30) sous-ensemble de distribution secondaire.

8. Réseau électrique selon la revendication 7, dans lequel chaque conducteur (10) du réseau électrique principal est connecté à l'un des interrupteurs (31) de plusieurs moyen sélecteur (30).

9. Réseau électrique selon l'une quelconque des revendications précédentes, utilisé également pour le transport de données numériques.

10. Réseau électrique selon les revendications 2 et 3 prises ensemble, comportant des moyens de mesure aptes à mesurer les valeurs de tension et de courant au niveau de chaque interrupteur (21, 31) et dans lequel le contrôleur à partir du résultat des dites mesures est apte à détecter un défaut électrique et agir en retour sur le moyen de protection.

11. Réseau électrique suivant la revendication 10 dans lequel chaque interrupteur (21, 31) et ses moyens de protection (6, 7) contre les défauts électriques sont formés par un disjoncteur, de préférence de type SSPC.

12. Aéronef comportant un réseau électrique conforme à l'une des revendications précédentes.

13. Véhicule de transport comportant un réseau électrique conforme à l'une des revendications 1 à 11.

14. Bâtiment à usage particulier, tels qu'hôpitaux, comportant un réseau électrique conforme à l'une des revendications 1 à 11.

## Patentansprüche

1. Elektrisches Netzwerk für eine eingegrenzte Umgebung, welches dazu bestimmt ist, elektrische Energie von mindestens einer elektrischen Energiequelle (5) zu mehreren elektrischen Ladungen (4) zu transportieren:
a) wobei das elektrische Netzwerk ein elektrisches Hauptnetzwerk (1) beinhaltet, welches mehrere elektrische Leiter (10) beinhaltet, welche elektrisch voneinander isoliert sind, die imstande sind, elektrische Energie zwischen einer Primärverteilungseinheit (2) der mindestens einen elektrischen Energiequelle (5) und einer Sekundärverteilungseinheit (3) zur Vielzahl von elektrischen Ladungen (4) zu verteilen;
b) wobei die Primärverteilungseinheit (2) für jede elektrische Energiequelle (5) mindestens ein Primärverteilungsteileinheit-Wählmittel (20) beinhaltet, wobei das Wählmittel (20) eine Vielzahl von Schaltern (21) beinhaltet, wobei die Schalter Folgendes beinhalten:
- eine gemeinsame Anschlussklemme (22), die allen Schaltern des betrachteten Wählmittels gemeinsam ist, dazu bestimmt, an eine Klemme der entsprechenden elektrischen Energiequelle (5) angeschlossen zu werden;
- jeweils eine zweite Anschlussklemme (23), die an einen der elektrischen Leiter (10) des elektrischen Hauptnetzwerkes angeschlossen ist;
c) wobei die Sekundärverteilungseinheit (3) für jede elektrische Ladung (4) ein Sekundärverteilungsteileinheit-Wählmittel (30) beinhaltet, wobei das Wählmittel (30) eine Vielzahl von Schaltern (31) beinhaltet, wobei die Schalter Folgendes beinhalten:
- eine elektrische Ausgangsklemme (32), welche allen Schaltern des betrachteten Wählmittels gemeinsam ist, dazu bestimmt, an die entsprechende elektrische Ladung (4) angeschlossen zu werden;
- jeweils eine zweite Anschlussklemme, die an einen der elektrischen Leiter (10) des elektrischen Hauptnetzwerkes angeschlossen ist; und
d) wobei das elektrische Netzwerk eine Steuer- und Kontrollschaltung (9) beinhaltet, welche zur Verwaltung des elektrischen Netzwerkes angepasst ist, und weitere Spannungs- und Strommessvorrichtungen im Bereich der Primärteileinheiten (2) und der Sekundäreinheiten (3), um für jede elektrische Ladung (4) durch Aktionen, die durch die Steuer- und Kontrollschaltung an den Schaltern (31) der Wählmittel (30) einer Sekundärverteilungsteileinheit (3), die mit jeder elektrischen Ladung (4) verknüpft sind, für das Schließen oder das Öffnen einer elektrischen Verbindung oder mehr aus den zwischen der elektrischen Ausgangsklemme (32) und den betreffenden elektrischen Leitern (10) des elektrischen Hauptnetzwerks (1) erstellten elektrischen Verbindungen, und die Versorgung der entsprechenden elektrischen Ladung (4) mit elektrischer Energie, und dies in dynamischer Form, zu sorgen, und um eine Störung in dem elektrischen Netzwerk (1) zu lokalisieren und zu isolieren, basierend auf den Spannungs- und Strommessungen und deren Variationen im Bereich der Primärteileinheiten (2) und der Sekundäreinheiten (3).

2. Elektrisches Netzwerk nach Anspruch 1, wobei jeder Schalter (21, 31) eines jeden Wählmittels (20, 30) in Reihe an mindestens ein Schutzmittel (6, 7) gegen die elektrischen Störungen, wie elektrische Überstromstärken, elektrische Überspannungen, elektrische Unterspannungen, Differenzstörungen und in Reihe oder parallel auftretende Lichtbogen angeschlossen ist.

3. Elektrisches Netzwerk nach Anspruch 1 oder Anspruch 2, welches dazu bestimmt ist, die elektrische Energie von mehreren elektrischen Energiequellen (5) zu mehreren Ladungen (4) zu transportieren, wobei die Schalter (21) jeder Primärverteilungsteileinheit (20) und jeder Sekundärverteilungsteileinheit (30) in der Richtung des Öffnens oder des Schließens durch Fernsteuerung durch einen Controller unter Berücksichtigung der Konfiguration der Ladungen betätigt werden, wobei der Controller für den dynamischen Abgleich der Ströme in dem Netzwerk zwischen den elektrischen Energiequellen (5) und/oder zwischen den Leitern durch Umschalten von elektrischen Ladungen und/oder Energiequellen in den elektrischen Leitern (10) des Netzwerks sorgt.

4. Elektrisches Netzwerk nach Anspruch 2, wobei das Schutzmittel ein Sicherungselement (6) umfasst.

5. Elektrisches Netzwerk nach Anspruch 2, wobei das Schutzmittel einen Schutzschalter (7) umfasst.

6. Elektrisches Netzwerk nach einem der vorstehenden Ansprüche, wobei die Anschlussklemme der elektrischen Energiequelle (5), an die ein Leiter (10) des elektrischen Hauptnetzwerks (1) anhand eines der Schalter (21) eines Primärverteilungsteileinheit-Wählmittels (20) angeschlossen werden wird, eine Ausgangsklemme (50) der elektrischen Energiequelle (5) oder ein Nullleiter der Energiequelle oder eine Masse der elektrischen Installation ist.

7. Elektrisches Netzwerk nach einem der vorstehenden Ansprüche, wobei jeder Leiter (10) des elektrischen Hauptnetzwerks (1) an einen der Schalter (31) mindestens eines der Sekundärverteilungsteileinheit-Wählmittel (30) angeschlossen ist.

8. Elektrisches Netzwerk nach Anspruch 7, wobei jeder Leiter (10) des elektrischen Hauptnetzwerks an einen der Schalter (31) mehrerer Wählmittel (30) angeschlossen ist.

9. Elektrisches Netzwerk nach einem der vorstehenden Ansprüche, welches auch für den Transport von digitalen Daten verwendet wird.

10. Elektrisches Netzwerk nach den Ansprüchen 2 und 3, gemeinsam genommen, welches Messmittel beinhaltet, die imstande sind, die Spannungs- und Stromwerte im Bereich jedes Schalters (21, 31) zu messen, und wobei der Controller imstande ist, aus dem Ergebnis der Messungen eine elektrische Störung zu erkennen, und als Reaktion darauf an der Schutzvorrichtung tätig zu werden.

11. Elektrisches Netzwerk nach Anspruch 10, wobei jeder Schalter (21, 31) und dessen Schutzmittel (6, 7) gegen die elektrischen Störungen durch einen Schutzschalter, vorzugsweise vom Typ SSPC gebildet sind.

12. Luftfahrzeug, welches ein elektrisches Netzwerk nach einem der vorstehenden Ansprüche beinhaltet.

13. Transportfahrzeug, welches ein elektrisches Netzwerk nach einem der Ansprüche 1 bis 11 beinhaltet.

14. Gebäude zur besonderen Verwendung, wie Spitäler, welches ein elektrisches Netzwerk nach einem der Ansprüche 1 bis 11 beinhaltet.

## Claims

1. Electrical network for a confined environment intended to transport electric power from at least one electric power source (5) to a plurality of electrical loads (4):
a) the electrical network including a main electrical network (1) including a plurality of electrical conductors (10) that are electrically insulated from one another, capable of distributing electric power between a primary distribution assembly (2) of the at least one electric power source (5) and a secondary distribution assembly (3) to the plurality of loads (4);
b) wherein the primary distribution assembly (2) includes, for each electric power source (5), at least one primary distribution sub-assembly selector means (20), which selector means (20) includes a plurality of switches (21), which switches:
- include a common terminal (22), common to all switches of the selector means considered, intended to be connected to a terminal of the corresponding electric power source (5) ;
- each include a second terminal (23) connected to one of the electrical conductors (10) of the main electrical network;
c) wherein the secondary distribution assembly (3) includes, for each electrical load (4), a secondary distribution sub-assembly selector means (30), which selector means (30) includes a plurality of switches (31), which switches:
- include an electrical output terminal (32), common to all switches of the selector means considered, intended to be connected to the corresponding electrical load (4);
- each include a second terminal connected to one of the electrical conductors (10) of the main electrical network; and
d) the electrical network including an instrumentation and control circuit (9) adapted to manage the electrical network, and other devices for measuring voltages and currents at the primary sub-assemblies (2) and secondary assemblies (3), so as to ensure, for each electrical load (4), by actions carried out by the instrumentation and control circuit on the switches (31) of the secondary distribution sub-assembly (3) selector means (30) associated with each electrical load (4), the closing or opening of one or more electrical connections from among the electrical connections established between the electrical output terminal (32) and the relevant electrical conductors (10) of the main electrical network (1) and the power supply to the corresponding electrical load (4) with electric power, in a dynamic manner, and so as to locate and insulate a fault in the electrical network (1), based on the voltage and current measurements and the variations thereof at the primary sub-assemblies (2) and secondary assemblies (3).

2. Electrical network according to claim 1, wherein each switch (21, 31) of each selector means (20, 30) is connected in series to at least one protection means (6, 7) for protecting against electrical faults such as electrical overcurrents, electrical overvoltages, electrical undervoltages, differential faults and serial or parallel electric arcs.

3. Electrical network according to claim 1 or claim 2, intended to transport electric power from a plurality of electric power sources (5) to a plurality of loads (4) wherein the switches (21) of each primary distribution sub-assembly (20) and of each secondary distribution sub-assembly (30) are actuated in the opening or closing direction by remote control by a controller, taking into account the configuration of the loads, said controller providing the dynamic balancing of the currents in the network between the electric power sources (5) and/or between the conductors by switching loads and/or electric power sources on the electrical conductors (10) of the network.

4. Electrical network according to claim 2, wherein the protection means comprises a fuse element (6).

5. Electrical network according to claim 2, wherein the protection means comprises a circuit breaker (7).

6. Electrical network according to any of the preceding claims, wherein the terminal of the electric power source (5) to which a conductor (10) of the main electrical network (1) will be connected via one of the switches (21) of a primary distribution sub-assembly selector means (20) is an output terminal (50) of said electric power source (5) or a neutral of said power source or a ground of the electrical installation.

7. Electrical network according to any of the preceding claims, wherein each conductor (10) of the main electrical network (1) is connected to one of the switches (31) of at least one of the secondary distribution sub-assembly selector means (30).

8. Electrical network according to claim 7, wherein each conductor (10) of the main electrical network is connected to one of the switches (31) of a plurality of selector means (30).

9. Electrical network according to any of the preceding claims, also used for transporting digital data.

10. Electrical network according to claims 2 and 3 taken in combination, including measurement means capable of measuring the voltage and current values at each switch (21, 31) and wherein the controller, based on the result of said measurements, is able to detect an electrical fault and to act in response on the protection means.

11. Electrical network according to claim 10, wherein each switch (21, 31) and the protection means (6, 7) thereof for protecting against electrical faults are formed by a circuit breaker, preferably of the SSPC type.

12. Aircraft comprising an electrical network according to one of the preceding claims.

13. Transport vehicle including an electrical network according to one of claims 1 to 11.

14. Special-purpose building, such as a hospital, including an electrical network according to one of claims 1 to 11.
